# EUROPEAN PATENT APPLICATION

(11) **EP 4 685 342 A1**
(43) Date of publication of application: **28.01.2026**
(21) Application number: 24190564.5
(22) Date of filing: 24.07.2024
(51) Int. Cl.: F01D 15/10, F02C 6/12, F04D 29/26, F01D 5/02

(54) **ROTOR ASSEMBLY FOR A TURBOMACHINE, TURBOMACHINE, AND METHOD OF MOUNTING/DEMOUNTING AN IMPELLER ONTO A SHAFT OF A TURBOMACHINE**

(71) Applicant: Accelleron Switzerland Ltd., 5400 Baden (CH)
(72) Inventor: MOSDZIEN, Moritz, 5400 Baden (CH); STREBEL, Andreas, 5423 Freienwil (CH)
(74) Representative: Zimmermann & Partner Patentanwälte mbB

(57) **Abstract**

A rotor assembly (10) for a turbomachine (20) is described. The rotor assembly (10) includes a shaft (11) having a first axial end (111) and a second axial end (112). At least one of the first axial end (111) and the second axial (112) has a mounting portion (12). The rotor assembly (10) further includes an impeller (13) having a mating mounting portion (14) for mounting the impeller (13) on the mounting portion (12) of the shaft (11). Further, the rotor assembly (10) includes a first engagement portion (151) provided on the shaft engageable with a corresponding second engagement portion (152) provided on a non-rotatable part (21) of the turbomachine (20) to lock a rotational degree of freedom of the shaft (11) around a central longitudinal axis of the shaft (11).

## Description

### TECHNICAL FIELD

Embodiments of the present disclosure relate to rotor assemblies for turbomachines, particularly turbochargers. Further embodiments of the present disclosure relate to methods of mounting/demounting an impeller onto a shaft of a turbomachine.

### BACKGROUND

Turbomachines are devices that transfer energy between a rotor and a fluid, including both turbines and compressors. They play a crucial role in various industrial applications, such as power generation, aviation, and automotive engineering. Turbomachines can be classified into two main categories: those that extract energy from a fluid (e.g. turbines) and those that impart energy to a fluid (e.g. compressors). The fundamental operation of turbomachines involves the transfer of energy from the rotor to the fluid or vice versa. This is achieved through the blades or vanes on the rotor, which interact with the fluid. A turbocharger is a specific type of turbomachine that is widely used in internal combustion engines to enhance their performance. It increases the engine's efficiency and power output by forcing extra air into the combustion chamber.

Impeller mounting and demounting in turbomachines are critical processes that involve securing and removing the impeller from the rotor shaft. Traditionally, these procedures rely on mechanical fastening methods which require precise alignment and significant labor. These conventional techniques can lead to extended downtime during maintenance, risk of misalignment, and potential damage to the impeller or shaft due to the high forces involved in mounting and demounting. Additionally, repeated mechanical stresses can cause wear and fatigue over time, reducing the longevity of the components.

Given these drawbacks, there is a demand for improved rotor assemblies and methods of impeller mounting/demounting which at least partially overcome some of the problems of the state of the art.

### SUMMARY

In light of the above, a rotor assembly for a turbomachine, a turbomachine, and a method of mounting/demounting an impeller onto a shaft of a turbomachine according to the independent claims are provided. Further aspects, advantages, and features are apparent from the dependent claims, the description, and the accompanying drawings.

According to an aspect of the present disclosure, a rotor assembly for a turbomachine is provided. The rotor assembly includes a shaft having a first axial end and a second axial end, wherein at least one of the first axial end and the second axial end has a mounting portion. Additionally, the rotor assembly includes an impeller having a mating mounting portion for mounting the impeller on the mounting portion of the shaft. Further, the rotor assembly includes an impeller having a mating mounting portion for mounting the impeller on the mounting portion of the shaft. Moreover, the rotor assembly includes a first engagement portion provided on the shaft. The first engagement portion is engageable with a corresponding second engagement portion provided on a non-rotatable part of the turbomachine to lock a rotational degree of freedom of the shaft around a central longitudinal axis of the shaft.

Accordingly, compared to the state of the art, the rotor assembly according to embodiments of the present disclosure offers significant improvements. These advancements focus on reducing the labor required for both assembly and disassembly, which streamlines the maintenance process and minimizes machine downtime. The rotor assembly as described herein provides for a simplified assembly and disassembly which translates directly into enhanced service-friendliness, allowing maintenance personnel to perform necessary tasks more efficiently and with reduced risk of error.

Moreover, the mounting quality can be enhanced in the rotor assembly according to embodiment of the present disclosure. A consistent and secure attachment of the impeller to the rotor shaft can be achieved, reducing the likelihood of misalignment and associated wear. This results in longer component life and more reliable machine performance. The cumulative effect of these benefits is a more efficient, cost-effective, and user-friendly maintenance process.

According to a further aspect of the present disclosure, a turbomachine, particularly a turbocharger, is provided. The turbomachine includes a locking mechanism configured to lock a rotational degree of freedom of a shaft around a central longitudinal axis of the shaft for assembly or disassembly of an impeller on the shaft.

According to another aspect of the present disclosure, a method of mounting/demounting an impeller onto a shaft of a turbomachine is provided. The method includes providing a shaft having a first axial end and a second axial end, wherein at least one of the first axial end and the second axial end has a mounting portion. Additionally, the method includes locking a rotational degree of freedom of the shaft around a central longitudinal axis of the shaft relative to a non-rotatable part of the turbomachine by using a locking mechanism. The locking mechanism is provided by a first engagement portion provided on the shaft which is engageable with a corresponding second engagement portion provided on the non-rotatable part of the turbomachine. Further, the method includes establishing or disestablishing a connection between the mounting portion of the shaft with a mating mounting portion of the impeller, particularly by rotating the impeller relative to the shaft.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic longitudinal sectional view of a rotor assembly for a turbomachine according to embodiments described herein in which the locking mechanism is disengaged;
- Fig. 2: shows a schematic longitudinal sectional view of a rotor assembly for a turbomachine according to embodiments described herein in which the locking mechanism is engaged;
- Fig. 3: shows a transversal sectional view through a rotor assembly for a turbomachine according to embodiments described herein with a first exemplary configuration of the engaging elements of the shaft and the corresponding engaging elements on the non-rotatable part;
- Fig. 4: shows a transversal sectional view through a rotor assembly for a turbomachine according to embodiments described herein with a second exemplary configuration of the engaging elements of the shaft and the corresponding engaging elements on the non-rotatable part;
- Fig. 5: shows a sectional view along line B-B shown in Fig. 2 for illustrating a third exemplary configuration of the engaging elements of the shaft and the corresponding engaging elements on the non-rotatable part;
- Fig. 6: shows a flowchart for illustrating a method of mounting/demounting an impeller onto a shaft of a turbomachine according to embodiments described herein;
- Fig. 7: shows a schematic longitudinal sectional view of a turbomachine with a rotor assembly according to embodiments described herein in which the locking mechanism is disengaged; and
- Fig. 8: shows a schematic longitudinal sectional view of a turbomachine with a rotor assembly according to embodiments described herein in which the locking mechanism is engaged;

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

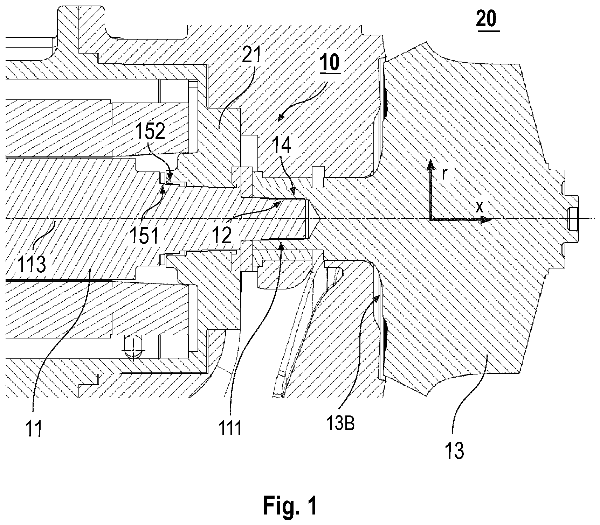

With exemplary reference to Figs. 1-5 and 7-8, a rotor assembly 10 for a turbomachine 20 according to embodiments of the present disclosure are described.

According to embodiments, which can be combined with other embodiments described herein, the rotor assembly 10 includes a shaft 11 having a first axial end 111 and a second axial end 112. At least one of the first axial end 111 and the second axial 112 has a mounting portion 12. In particular, the mounting portion 12 is configured for mounting an impeller onto the shaft 11. Additionally, the rotor assembly 10 includes an impeller 13 having a mating mounting portion 14 for mounting the impeller 13 on the mounting portion 12 of the shaft 11. Further, the rotor assembly 10 includes a first engagement portion 151 provided on the shaft. The first engagement portion 151 is configured to be engageable with a corresponding second engagement portion 152 provided on a non-rotatable part 21 of the turbomachine 20 to lock a rotational degree of freedom of the shaft 11 around a central longitudinal axis of the shaft 11.

Accordingly, the rotor assembly according to embodiments of the present disclosure provides some advantages compared to conventional rotor assemblies, particularly for mounting and demounting an impeller on the shaft. In particular, these advantages are related to minimizing the labor involved in assembly and disassembly, thereby optimizing maintenance procedures and reducing operational downtime. The configuration of the rotor assembly as described herein facilitates a simplified approach to both assembly and disassembly, enhancing user-friendliness for maintenance personnel and enabling more efficient and error-resistant maintenance operations.

In the present disclosure, a "rotor assembly for a turbomachine" can be understood as an assembly which rotates during operation of the turbomachine. In other words, the rotor assembly can be understood as a unit of two or more components, e.g. a shaft and an impeller, which are rotatable for operation of the turbomachine.

In the present disclosure, the "mounting portion of the shaft" can be understood as a specific part or portion of the shaft, which is configured to connect an impeller. Typically, the mounting portion of the shaft is configured to enable secure attachment of an impeller being mounted. In particular, the mounting portion of the shaft is provided on an end of the shaft. For instance, the shaft may include a first mounting portion provided on a first end of the shaft. Additionally or alternatively, the shaft may include a second mounting portion provided on a second end of the shaft. It is to be understood, that the second end of the shaft is opposite the first end of the shaft.

In the present disclosure, the "mating mounting portion of the impeller" can be understood as a specific part or portion of the impeller which is configured to be connected with the the mounting portion provided on the shaft.

In the present disclosure, the "first engagement portion provided on the shaft" can be understood as a specific portion on the shaft configured to interact with a corresponding portion on a non-rotatable component of a turbomachine. The function of the first engagement portion is to engage with the corresponding portion on the non-rotatable component to restrict or lock the rotational movement of the shaft around its central longitudinal axis. Accordingly, the "second engagement portion provided on the non-rotatable part" can be understood as a specific portion of the non-rotatable part configured to interact with the first engagement portion of the shaft.

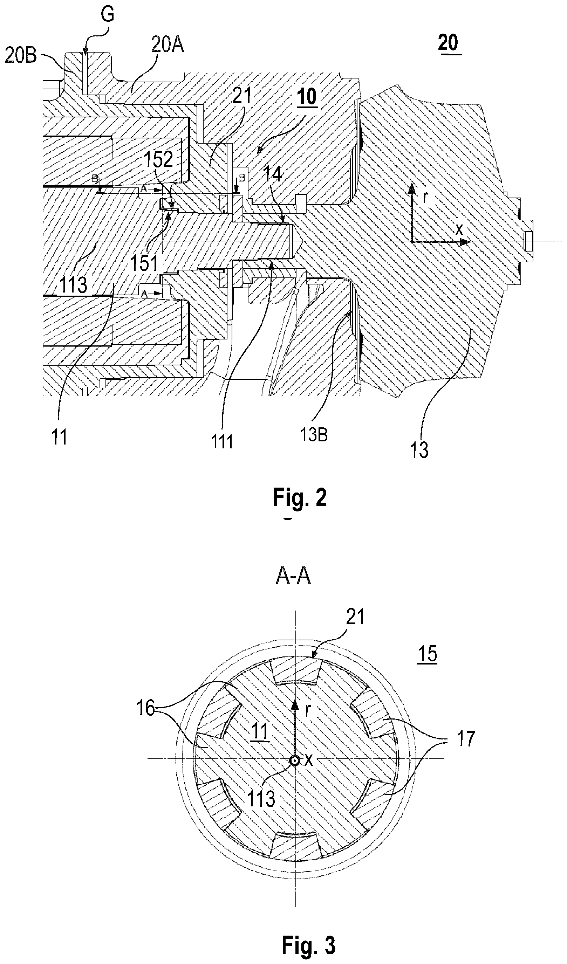

According to embodiments, which can be combined with other embodiments described herein, the first engagement portion 151 is configured to be engageable with the corresponding second engagement portion 152 when the shaft 11 is moved in an axial direction relative to the non-rotatable part 21 of the turbomachine 20. It is to be understood that first engagement portion 151 and the corresponding second engagement portion 152 can also be engaged when the non-rotatable part 21 of the turbomachine 20 is moved in an axial direction relative to the shaft 11. Further, from Figs. 1 and 2, it is to be understood that a relative axial movement between the shaft 11 and the non-rotatable part 21 can be realized in when two housing parts of the turbomachine are not attached to each other, such that a gap G between the two housing parts can be provided. For example, Fig. 1 shows a schematic longitudinal sectional view of the rotor assembly 10 in which the first engagement portion 151 and the second engagement portion 152 are disengaged, which corresponds to a state of the turbomachine in which all housing parts are connected with each other, i.e. a fully assembled housing. Fig. 2 shows a schematic longitudinal sectional view of the rotor assembly 10 in which the first engagement portion 151 and the second engagement portion 152 are engaged and a gap G between a first housing part 20A and a second housing part 20B is provided, which allows the relative axial movement between the shaft 11 and the non-rotatable part 21. For instance, the first housing part 20A can be an impeller housing, such as a compressor or turbine housing, and the second housing part 20B can be a bearing housing of the turbomachine 20.

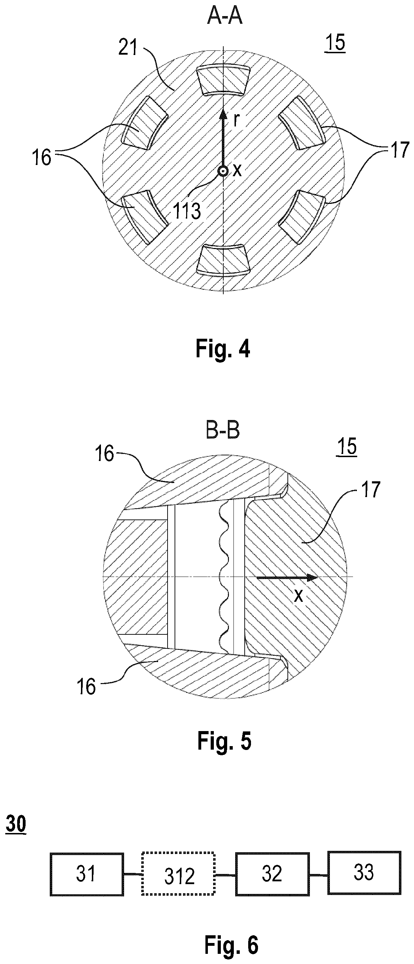

With exemplary reference to Fig. 3, according to embodiments, which can be combined with other embodiments described herein, the first engagement portion 151 has a one or more first engaging elements 16 extending in a radial direction r, particularly away from the central longitudinal axis 113 of the shaft 11. Alternatively, the first engagement portion 151 can have a one or more first engaging elements 16 extending in an axial direction of the central longitudinal axis 113 of the shaft 11, as exemplarily shown in Fig. 4.

According to embodiments, which can be combined with other embodiments described herein, the corresponding second engagement portion 152 has one or more corresponding second engaging elements 17 extending in a radial direction, particularly towards the central longitudinal axis 113 of the shaft 11, as exemplarily shown in Fig. 3. Alternatively, the corresponding second engagement portion 152 can have one or more corresponding second engaging elements 17 extending in the axial direction of the central longitudinal axis 113 of the shaft 11, particularly towards the one or more first engaging elements 16. Alternatively, the one or more corresponding second engaging elements 17 may be provided by one or more axial receptions for one or more axially extending first engaging elements 16, as exemplarily shown in Fig. 4.

Fig. 5 shows a sectional view along line B-B shown in Fig. 2. Fig. 5 shows an exemplary configuration which both, the one or more first engaging elements 16 and the one or more corresponding second engaging elements 17 extend axially towards each other.

According to embodiments, which can be combined with other embodiments described herein, the one or more first engaging elements 16 include a plurality of first engaging elements 16 circumferentially provided around the central longitudinal axis 113 of the shaft 11. Accordingly, the one or more corresponding second engaging elements 17 may include a plurality of second engaging elements 17 circumferentially provided around the central longitudinal axis 113 of the shaft 11.

According to embodiments, which can be combined with other embodiments described herein, the mounting portion 12 includes a thread and the mating mounting portion 14 includes a mating thread. For instance, the mounting portion 12 can include a male thread and the mating mounting portion 14 can include a mating female thread, or vice versa.

Alternatively, the mounting portion 12 may include a press-fit and the mating mounting portion 14 may include a mating press-fit. For instance, the mating thread or the mating press-fit of the second mounting portion 14 can be provided on a backside 13B of the impeller 13. In particular, the mating thread can be a blind hole thread. Accordingly, the mating press-fit can be a blind hole press-fit.

According to embodiments, which can be combined with other embodiments described herein, the mounting portion 12 is a first mounting portion 121 provided on the first end 111 of the shaft 11. The impeller 13 can be a first impeller 131. The mating mounting portion 14 can be a first mating mounting portion 141 for mounting the first impeller 131 on the first mounting portion 121 of the shaft 11.

According to embodiments, which can be combined with other embodiments described herein, the rotor assembly further comprises a second impeller 132 provided on the second axial end 112 of the shaft 11. Typically, the second impeller 132 is either screwed or welded onto the shaft 11.

According to embodiments, which can be combined with other embodiments described herein, wherein the second axial end 112 of the shaft 11 has a second mounting portion 122 and the second impeller 132 has a second mating mounting portion 142 for mounting the second impeller 132 on the second mounting portion 122. For instance, the second mounting portion 122 can have a second thread and the second impeller 132 can have a second mating thread for mounting the second impeller 132 onto the shaft via a thread connection.

Alternatively, the second mounting portion 122 may have a second press-fit and the second mating mounting portion 142 may have a second mating press-fit for mounting the second impeller 132 onto the shaft via a press-fit connection.

Typically, the second mating mounting portion 142 is provided on a backside 132B of the second impeller 132. In particular, the second mating mounting portion 142 can be a blind hole thread. In case of a press-fit configuration, the second mating mounting portion 142 can be a blind hole press-fit.

According to another aspect, a turbomachine 20, particularly a turbocharger, is provided. The turbomachine 20 includes a locking mechanism 15 configured to lock a rotational degree of freedom of a shaft 11 around a central longitudinal axis of the shaft 11 for assembly or disassembly of an impeller 13 on the shaft 11. Typically, the locking mechanism 15 includes a first engagement portion 151 provided on the shaft 11. Further, the locking mechanism 15 typically includes a corresponding second engagement portion 152 provided on a non-rotatable part 21. In particular, the non-rotatable part 21 can be a housing part of the turbomachine, e.g. a part of a bearing housing.

According to embodiments, which can be combined with other embodiments described herein, the first engagement portion 151 is configured to be engageable with the corresponding second engagement portion 152 when the shaft 11 is moved in an axial direction relative to the non-rotatable part 21 of the turbomachine 20 (or vice versa) for the assembly or disassembly of the impeller 13 on the shaft 11.

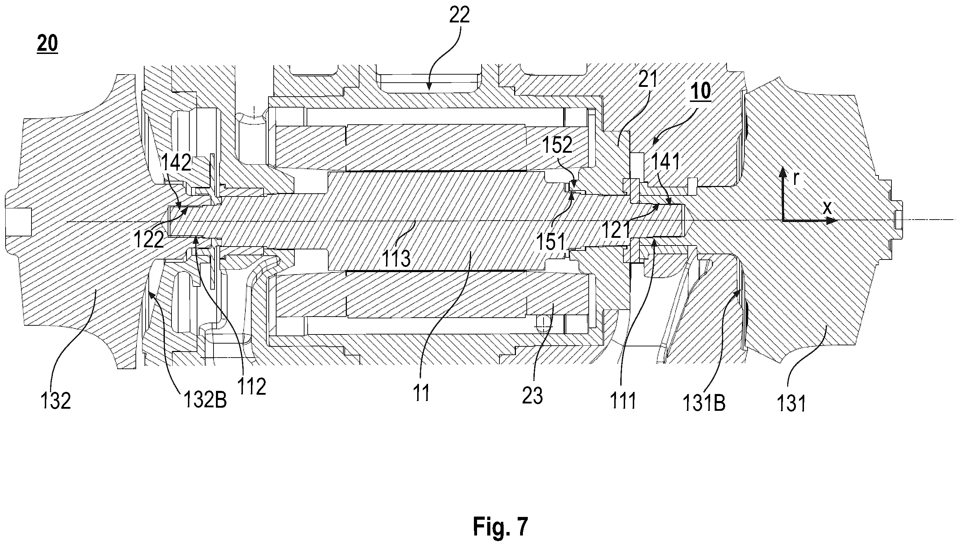

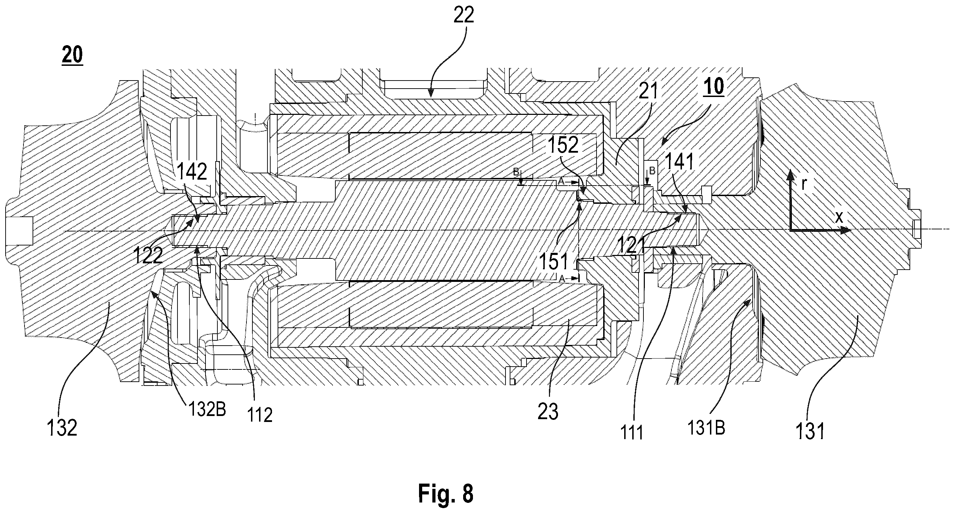

With exemplary reference to Figs. 7 and 8, according to embodiments, which can be combined with other embodiments described herein, the turbomachine 20 further includes an electric machine 22. For instance, the electric machine 22 can be a permanently excited electric machine.

According to embodiments, which can be combined with other embodiments described herein, the locking mechanism 15 is located within an axial extension of the electric machine 22. For instance, the axial extension of the electric machine 22 may correspond to the axial extension of the stator 23 of the electric machine, as exemplarily indicated in Figs. 7 and 8.

In view of the embodiments described herein, it is to be understood that the shaft 11 and the impeller 13 of the turbomachine 20 are typically part of a rotor assembly 10 according to any embodiments described herein.

With exemplary reference to the flow diagram of Fig. 6, embodiments of a method 30 of mounting/demounting an impeller 13 onto a shaft 11 of a turbomachine 20 according to the present disclosure are described.

According to embodiments, which can be combined with other embodiments described herein, the method 30 includes providing (represented by block 31 in Fig. 6) a shaft 11 having a first axial end 111 and a second axial end 112. At least one of the first axial end 111 and the second axial end 112 has a mounting portion 12 for mounting an impeller 13 on the shaft 11. Additionally, the method 30 includes locking (represented by block 32 in Fig. 6) a rotational degree of freedom of the shaft 11 around a central longitudinal axis of the shaft 11 relative to a non-rotatable part 21 of the turbomachine 20 by using a locking mechanism 15. The locking mechanism 15 is provided by a first engagement portion 151 provided on the shaft 11 and a corresponding second engagement portion 152 provided on the non-rotatable part 21 of the turbomachine 20. The first engagement portion 151 is configured to be engageable with the corresponding second engagement portion 152. Further, the method 30 includes establishing/disestablishing (represented by block 33 in Fig. 6) a connection between the mounting portion 12 of the shaft 11 with a mating mounting portion 14 of the impeller 13. For instance, establishing/disestablishing the connection between the mounting portion 12 of the shaft 11 with the mating mounting portion 14 of the impeller 13 may include rotating the impeller relative to the shaft 11, particularly around the central longitudinal axis 113 of the shaft 11.

According to embodiments, which can be combined with other embodiments described herein, locking (represented by block 32 in FIG. 6) the rotational degree of freedom of the shaft 11 includes moving the shaft 11 in an axial direction relative to the non-rotatable part 21 of the turbomachine 20 or moving the non-rotatable part 21 in an axial direction relative to the shaft 11.

In particular, the method 30 further includes providing (represented by block 312 in FIG. 6) an axial displacement capability for the shaft 11 or the non-rotatable part 21 prior to locking (represented by block 32 in FIG. 6) the rotational degree of freedom of the shaft 11. In particular, providing the axial displacement capability typically includes providing a gap G between a first housing part 20A and a second housing part 20B of the turbomachine 20, e.g. by loosening a connection between the first housing part 20A and the second housing part 20B.

In view of the embodiments described herein, it is to be understood that compared to the state of the art, that both assembly and disassembly can facilitated, thereby expediting the maintenance process and reducing machine downtime. The described rotor assembly, turbomachine and method of mounting/demounting an impeller feature a simplified approach to assembly and disassembly, which directly improves service-friendliness. This allows maintenance personnel to carry out essential tasks more efficiently and with a lower risk of errors.

While the foregoing is directed to embodiments, other and further embodiments may be devised without departing from the basic scope, and the scope is determined by the claims that follow.

### REFERENCE NUMBERS

- 10: rotor assembly
- 11: shaft
- 111: first axial end of shaft
- 112: second axial end of shaft
- 113: central longitudinal axis
- 12: mounting portion
- 121: first mounting portion
- 122: second mounting portion
- 13: impeller
- 131: first impeller (e.g. turbine wheel)
- 131B: backside of first impeller
- 132: second impeller (e.g. compressor wheel)
- 132B: backside of second impeller
- 14: mating mounting portion
- 141: first mating mounting portion
- 142: second mating mounting portion
- 15: locking mechanism
- 151: first engagement portion
- 152: second engagement portion
- 16: plurality of first engaging elements
- 17: plurality of second engaging elements
- 20: turbomachine
- 20A: first housing
- 20B: second housing
- 21: non-rotatable part of turbomachine
- 22: electric machine
- 23: stator of electric machine
- 30: method of mounting/demounting an impeller onto a shaft
- 31, 312, 32, 33: blocks of block diagram
- r: radial direction
- x: axial direction

## Claims

1. A rotor assembly (10) for a turbomachine (20), comprising:
- a shaft (11) having a first axial end (111) and a second axial end (112), wherein at least one of the first axial end (111) and the second axial (112) has a mounting portion (12);
- an impeller (13) having a mating mounting portion (14) for mounting the impeller (13) on the mounting portion (12) of the shaft (11); and
- a first engagement portion (151) provided on the shaft engageable with a corresponding second engagement portion (152) provided on a non-rotatable part (21) of the turbomachine (20) to lock a rotational degree of freedom of the shaft (11) around a central longitudinal axis of the shaft (11).

2. The rotor assembly (10) of claim 1, wherein the first engagement portion (151) is configured to be engageable with the corresponding second engagement portion (152) when the shaft (11) is moved in an axial direction relative to the non-rotatable part (21) of the turbomachine.

3. The rotor assembly (10) of claim 1 or 2, wherein the first engagement portion (151) has a one or more first engaging elements (16) extending in a radial direction, particularly away from a central longitudinal axis (113) of the shaft (11), or wherein the first engagement portion (151) has a one or more first engaging elements (16) extending in an axial direction of a central longitudinal axis (113) of the shaft (11), and wherein the corresponding second engagement portion (152) has one or more corresponding second engaging elements (17) extending in a radial direction, particularly towards the central longitudinal axis (113) of the shaft (11), or wherein the corresponding second engagement portion (152) has one or more corresponding second engaging elements (17) extending in the axial direction of the central longitudinal axis (113) of the shaft (11) towards the one or more first engaging elements (16).

4. The rotor assembly (10) of claim 3, wherein the one or more first engaging elements (16) comprise a plurality of first engaging elements (16) circumferentially provided around the central longitudinal axis (113) of the shaft (11), and wherein the one or more corresponding second engaging elements (17) comprise a plurality of second engaging elements (17) circumferentially provided around the central longitudinal axis (113) of the shaft (11).

5. The rotor assembly (10) of any of claims 1 to 4, wherein the mounting portion (12) comprises a thread or a press-fit, and wherein the mating mounting portion (14) comprises a mating thread or a mating press-fit.

6. The rotor assembly (10) of claim 5, wherein the mating thread or the mating press-fit of the second mounting portion (14) is provided on a backside (13B) of the impeller (13), particularly wherein the mating thread is a blind hole thread or the mating press-fit is a blind hole press-fit.

7. The rotor assembly (10) of any of claims 1 to 6, wherein the mounting portion (12) is a first mounting portion (121) provided on the first end (111) of the shaft (11), wherein the impeller (13) is a first impeller (131), wherein the mating mounting portion (14) is a first mating portion (141) for mounting the first impeller (131) on the first mounting portion (121) of the shaft (11), wherein the rotor assembly further comprises a second impeller (132) provided on the second axial end (112) of the shaft (11), particularly wherein the second impeller (132) is either screwed or welded onto the shaft (11).

8. The rotor assembly (10) of claim 7, wherein the second axial end (112) of the shaft (11) has a second mounting portion (122) having second thread or second press-fit, and wherein the second impeller (132) has a second mating portion (142) having a second mating thread or second mating press-fit for mounting the second impeller (132) on the second thread or second press-fit of the shaft (11), particularly wherein the second mating thread or second mating press-fit is provided on a backside (132B) of the second impeller (132), particularly wherein the second mating thread (142) is a blind hole thread or the second mating press-fit is a blind hole press-fit.

9. A turbomachine (20), particularly a turbocharger, comprising a locking mechanism (15) configured to lock a rotational degree of freedom of a shaft (11) around a central longitudinal axis of the shaft (11) for assembly or disassembly of an impeller (13) on the shaft (11).

10. The turbomachine (20) of claim 9, wherein the locking mechanism (15) comprises a first engagement portion (151) provided on the shaft (11) and a corresponding second engagement portion (152) provided on a non-rotatable part (21), particularly a housing part, of the turbomachine.

11. The turbomachine (20) of claim 9 or 10, wherein the first engagement portion (151) is configured to be engageable with the corresponding second engagement portion (152) when the shaft (11) is moved in an axial direction relative to the non-rotatable part (21) of the turbomachine (20) for the assembly or disassembly of the impeller (13) on the shaft (11).

12. The turbomachine (20) of any of claims 9 to 11, further comprising an electric machine (22), particularly a permanently excited e-machine, wherein the locking mechanism (15) is located within an axial extension of the electric machine.

13. The turbomachine (20) of any of claims 9 to 12, wherein the shaft (11) and the impeller (13) are part of a rotor assembly (10) according to any of claims 1 to 8.

14. A method (30) of mounting/demounting an impeller (13) onto a shaft (11) of a turbomachine (20), comprising:
- providing (31) a shaft (11) having a first axial end (111) and a second axial end (112), wherein at least one of the first axial end (111) and the second axial end (112) has a mounting portion (12);
- locking (32) a rotational degree of freedom of the shaft (11) around a central longitudinal axis of the shaft (11) relative to a non-rotatable part (21) of the turbomachine (20) by using a locking mechanism (15) provided by a first engagement portion (151) provided on the shaft (11) and engageable with a corresponding second engagement portion (152) provided on the non-rotatable part (21) of the turbomachine (20); and
- establishing/disestablishing (33) a connection between the mounting portion (12) of the shaft (11) with a mating mounting portion (14) of the impeller (13), particularly by rotating the impeller (13) relative to the shaft (11) around the central longitudinal axis (113) of the shaft (11).

15. The method (30) of claim 14, wherein locking (32) the rotational degree of freedom of the shaft (11) comprises moving the shaft (11) in an axial direction relative to the non-rotatable part (21) of the turbomachine (20) or moving the non-rotatable part (21) in an axial direction relative to the shaft (11), particularly further comprising providing (312) an axial displacement capability for the shaft (11) or the non-rotatable part (21) prior to locking (32) the rotational degree of freedom of the shaft (11).
